(19) **Europäisches Patentamt**
**European Patent Office**
**Office européen des brevets**

(11) **EP 4 660 907 A1**

(12) **EUROPEAN PATENT APPLICATION**

(43) Date of publication:
**10.12.2025 Bulletin 2025/50**

(21) Application number: **24382603.9**

(22) Date of filing: **04.06.2024**

(51) International Patent Classification (IPC):
**G06Q 10/04** (2023.01)   **A01K 61/00** (2017.01)
**G06Q 50/02** (2024.01)

(52) Cooperative Patent Classification (CPC):
**G06Q 50/02; A01K 29/00; A01K 61/00;
G06Q 10/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Ecohydros, S.L.**
 **39600 Maliaño, Cantabria (ES)**

• **Empresa Metropolitana de Abastecimiento y
 Saneamiento de Aguas de Sevilla S.A.
 41003 Sevilla (ES)**

(72) Inventors:
• **MONTEOLIVA HERRERAS, Agustín Pedro
 39600 Maliaño, CANTABRIA (ES)**
• **ESCOT MUÑOZ, Carmelo
 41003 SEVILLA (ES)**

(74) Representative: **Balder IP Law, S.L.
 Paseo de la Castellana 93
 5ª planta
 28046 Madrid (ES)**

(54) **COMPUTER IMPLEMENTED METHOD FOR EVALUATING A RESERVOIR**

(57)   The present invention relates to the evaluation of a reservoir and to the establishment of minimum environmental volumes in reservoirs based on environmental criteria. The method comprises the steps of: providing data relating to characteristics of the reservoir, primary producers and fish; calculating a value of a parameter representing the reservoir from the data relating to characteristics of the reservoir; calculating a value of a parameter associated to the primary producers from the data relating to characteristics of the reservoir and the primary producers; calculating a value of a parameter associated to the fish in the reservoir from the data relating to characteristics of the fish; and calculating from the value of a parameter associated to the primary producers and the fish, a photic zone volume associated with a given state of fish biomass.

**EP 4 660 907 A1**

**Description**

**TECHNICAL FIELD**

The present invention relates to the storage of surface water. More specifically, the present invention relates to the evaluation of a reservoir and to the establishment of minimum environmental volumes in reservoirs based on environmental criteria.

**STATE OF THE ART**

In the field of water storage, and more specifically in reservoirs, droughts mean a reduction in the volume available for water uses, as well as a deterioration of the aquatic ecosystem of these reservoirs, both in terms of water quality and the risk of massive fish kills, which in turn further degrade water quality and can lead to health problems. Moreover, when the fish species affected are native, the loss of biodiversity is added, which may even have legal consequences for the reservoir managers.

Reservoir ecosystems provide basic material security for water, food, and energy, and contribute to global economic growth and human health and well-being. All this determines the need to establish minimum environmental volumes in reservoirs, beyond which the risk of serious deterioration of the ecosystem requires the adoption of preventive and palliative measures and may ultimately compromise the safe supply of water from the reservoir.

Although in some cases minimum exploitation volumes are set by the responsible agencies, strictly environmental criteria are usually not used, or at least not in an explicit and quantifiable way. Occasionally, hydrological, morphological, or even water quality criteria are mentioned in a very generic and non-operational way, but they have not been translated into operational methods.

For example, in the management of large reservoirs, an approximate and impractical definition of the minimum environmental volume is used as: "the lowest volume that can be temporarily implanted in a water body without causing a persistent deterioration in its normal ecological status". However, there are no known methodological proposals for establishing the minimum environmental volume (MEV) in reservoirs based on the basis of objective biological criteria.

Among the different bioindicators that could be used to obtain the MEV, fish respond better to this type of assessment because they integrate vital information on larger spatio-temporal scales than the other bioindicators used and because their collapse has a greater environmental impact, precisely because they respond to these larger scales. This means that environmental perturbations have a slower response time in fish, but also that their subsequent recovery can affect their state of health at different levels of ecological organization (individual, population, community).

Indicators based on criteria related to the abundance and composition of fish communities in reservoirs are based on semi-quantitative information, obtained from catches per unit effort or biomass per unit effort using scientific fishing gear. The methods proposed for Central European areas are highlighted here, where there is a diversity of species adapted to this type of ecosystems and which actually form a community, which is not the case in other areas where is more appropriate to speak of fish associations or ichthyocenosis.

In other countries, such as Spain, no further progress has been made in this area because fish have been excluded as a biological indicator of ecological quality. However, there is a method that incorporates quantitative fish information (Quantitative Fish Biotic Index, QFBI) which has been applied experimentally to reservoirs in the Ebro River for more than a decade (Monteoliva et al., 2012). This method does not use the volume of the reservoir as an assessment criterion but aims to assess the quality of the water body according to the ichthyocenosis it hosts, so it is not directly applicable to the estimation of environmental risks according to the water level and, therefore, to the definition of the MEV in reservoirs.

On the other hand, there are methods for estimating the biogenic or fish carrying capacity of reservoirs that could be used to determine MEV in reservoirs. The best-known methods are very general and semi-empirical in nature and are based on morphometric (depth, surface area, etc.) and morphoedaphic aspects of the reservoir and its drainage basin, as well as its primary productivity (Sarkar et al., 2017). In India, for example, the following morphoedaphic index (MEI) proposed by Sugunan et al. (2002) is used:

$$Y = 0.9897 \cdot X^{1.3888}$$

where Y (kg ha$^{-1}$) is the fish production potential and X = specific conductivity (mmhos/cm) / mean depth (m).

These methods are statistical and do not consider the specific biological characteristics of each reservoir, which are diverse and changing, so that risk assessment based on this type of method is very general and its application to specific cases contains too much uncertainty to trigger management decisions for a scarce resource such as water. They are therefore not very precise and sensitive, which prevents them from been used to set risk thresholds and minimum environmental volumes.

On the other hand, there are several ecosystem models aimed at estimating fish production in reservoirs and the risks derived from different pressure factors, but these are dynamic models of a certain complexity and high data and information requirements, which limit their general applicability.

Approaches based on estimates of the fish biomass capacity of reservoirs refer to intensive farms, associated with fisheries and aquaculture, which are not systems comparable to reservoirs, but are forced from the point of view of biological production and therefore require permanent external support for their maintenance.

The need to establish minimum environmental volumes in reservoirs is palpable and growing due to the increasingly longer and deeper periods of water scarcity caused by climate change. This is particularly urgent in the case of reservoirs subject to drought conditions or partial emptying for maintenance purposes, with water levels below which the risk of serious deterioration of the ecosystem makes it necessary to adopt preventive and palliative measures, such as the design of fish management measures which, from an point of view of ecology, are included in the concept of biomanipulation.

The need to set a minimum reserve (i.e. volume) in the reservoir to avoid undesirable environmental impacts on its fauna and flora determines in some cases a reduction in the total volume available for supply. Although in certain cases minimum volumes in the reservoirs are stablished, explicit environmental criteria are not usually included.

As far as is known, there is no technical operational criterion on which to base the establishment of risk thresholds linked with concrete measures to prevent or minimize damage. Such a criterion and solution would not only reduce the risk of ecological damage to the reservoir, but also increase the range of priority uses with minimization of such damage through the adoption of preventive measures, adapting the biomass to the carrying capacity of the reservoir in these extreme situations.

There is a need for a method of reservoir evaluation that addresses the shortcomings of conventional methods.

## DESCRIPTION OF THE INVENTION

The method of the invention provides a criterion for the evaluation of reservoirs, such as in the establishment of a Minimum Environmental Volume (MEV) in reservoirs adaptable to different situations, in an objective and quantitative way, using ecosystem productivity and fish biomass.

In particular, the present invention provides a method for evaluating a reservoir from data relating to characteristics of the reservoir, data relating to characteristics of primary producers in the reservoir and data relating to characteristics of fish in the reservoir. The inclusion of fish biomass in the estimation of a MEV of a reservoir allows the establishment of risk levels of mass mortality and the establishment of fish biomass thresholds in relation to the capacity of the ecosystem as a function of water level.

Based on an approximation of a fish biomass state value that reflects the capacity of the ecosystem, it is possible to establish a level of water reserve below which special monitoring measures should be taken and biomanipulation measures, such as selective fish removal in this context, should be considered. This capacity indicator is also linked to the eutrophication status of the water body.

This is because the primary productivity of the system and the volume of water stored on a time scale compatible with the life span of the fish (5 to 10 years is considered appropriate) determine the availability of habitat and resources for the fish in the reservoir. This approach is based on the premise that the metabolism of the ecosystem is largely endogenous, i.e. driven by the dynamics of the phytoplankton (and aquatic macrophytes where present). Fish biomass is also involved in the eutrophication process and, in fact, feeds back more strongly the higher its concentration, i.e. the lower the water reserve in the reservoir.

This is an ecosystem approach where, as water volumes decline, fish populations would move from a situation where natural buffering mechanisms can compensate for environmental stress because their health is maintained, to a situation where these mechanisms deteriorate and their susceptibility to stressors increases while their ability to recover decreases. Many of these stressors are uncontrollable, such as massive inputs of suspended solids and sudden drops in temperature due to storms or other processes that cause sudden mixing of the water column, as well as viruses and diseases caused by other pathogens that spread rapidly when populations are overcrowded and weakened by chronic stress. The risk of succumbing to these factors increases as the water supply falls away from this threshold, particularly during periods of thermal stratification.

On the other hand, a high biomass of fish confined to areas of the reservoir where there is still oxygen to breathe rapidly regenerates the nutrient levels needed for phytoplankton to proliferate, thereby increasing the likelihood of massive algal blooms that contribute to eutrophication and the deterioration of the quality of the remaining water.

As the water level falls, more of the epilimnetic (oxygen-rich) zone reaches the bottom of the reservoir, increasing benthic oxygen demand in this layer and potentially accelerating the deficit of dissolved oxygen in the water column. In such a situation of low reservoir level, the water supplied may remain at the level of the epilimnion, further depleting the oxygen reserve in this layer, which is the only habitable one.

Ultimately, this method allows the evaluation of the reservoir with the calculation of one or more minimum environmental thresholds in terms of reservoir volume, using ecosystem productivity and fish biomass. In particular, the method can establish two risk thresholds for the reservoir level:

- An alert threshold based on the capacity of the ecosystem to maintain a given biomass of fish in a healthy state in terms of production and resources. The risk of mortality above this threshold would be low to moderate, but monitoring would be intensified, and measures would be taken to avoid reaching a critical situation.
- A critical threshold that can be considered an absolute minimum from an environmental point of view, as for the current conditions in the reservoir in terms of fish biomass, trophic status and the extent of the bottom with fine sediments. If the water level falls to this threshold during the thermal stratification period, the risk of mass mortality would be high.

A first aspect of the invention relates to a computer-implemented method for evaluating a reservoir, comprising the steps of:

providing on a computing system data relating to characteristics of the reservoir, data relating to characteristics of primary producers in the reservoir and data relating to characteristics of fish in the reservoir,
calculating a value of a parameter representing the reservoir from the data relating to characteristics of the reservoir,
calculating a value of a parameter associated to the primary producers in the reservoir from the data relating to characteristics of the reservoir and the data relating to characteristics of the primary producers,
calculating a value of a parameter associated to the fish in the reservoir from, at least, the data relating to characteristics of the fish in the reservoir,
and
calculating from, at least, the value of a parameter associated to the primary producers and the value of a parameter associated to the fish, a photic zone volume associated to a certain state of fish biomass in the reservoir.

The state of the fish biomass may refer, in embodiments of the invention, to a state of health of the fish biomass, to a state with a certain degree of deficiency for the fish biomass or to a state of risk of mortality of the fish biomass, among others.

In the context of the present invention, a reservoir is a large natural or artificial lake engineered to manage outflows to accomplish specific control objectives (e.g., storing water for power generation, drinking or irrigation, modifying downstream flows to reduce flooding, maintaining sufficient depth for navigation, etc.).

Primary producers are considered to be at least phytoplankton. In addition, primary producers may also include macrophytes if they are present in the reservoir. Phytoplankton are the autotrophic components of the plankton community. Macrophytes are plants that have adapted to living in aquatic environments.

The photic zone refers to an uppermost layer of a body of water that receives sunlight, allowing the phytoplankton to perform photosynthesis.

In embodiments of the invention, the characteristics of the reservoir comprise one or more of: height, water transparency surface area, and volume of the photic zone during a period when the reservoir is in a thermal stratification period.

In embodiments of the invention, the characteristics of the primary producers in the reservoir comprise one or more of: rate of carbon incorporation into the phytoplankton, chlorophyll content, molar ratio oxygen/chlorophyll, oxygen production per mole of chlorophyll, daily oxygen production from macrophytes, phytoplankton to fish transfer efficiency, macrophytes to fish transfer efficiency, area of aquatic macrophytes below the average water level, and chlorophyll-a concentration during a stratification period.

In embodiments of the invention, the characteristics of the fish in the reservoir comprise one or more of: fish oxygen consumption, oxygen consumption by fine sediments in the epilimnion, carbon/oxygen stoichiometry in respiration, fish biomass per unit area, and biomass confidence interval.

In an embodiment the height of the reservoir is the average water level in the reservoir obtained as a daily average over a given period. In an embodiment the average water transparency and the average chlorophyll content are a year-on-year average of water transparency and chlorophyll content, respectively, obtained in recent years, and they are preferably obtained by high-frequency monitoring. For example, recent years can be understood as the last 10 years, given that most of the current fish biomass was generated during this period.

In an embodiment, the average height of the reservoir, the average water transparency of the reservoir, and the average chlorophyll content in the reservoir represent the limnological environment of the reservoir, i.e. they provide historical information on reservoir morphology, water transparency and algal biomass. Discrete values of these parameters are usually available and, in an embodiment of the invention, can be interpolated to generate a complete series and calculate averages over specific periods of interest.

In an embodiment, the surface area of the reservoir corresponds to a parameter of the limnological environment and represents the surface area of the reservoir at the date of the fish survey. In one embodiment of the invention, it is obtained from measurements taken.

The volume of the photic zone during a period when the reservoir is in a thermal stratification period preferably refers to the volume of said zone during a period when the tendency of the reservoir is to form separate and distinct thermal layers during warm weather. For example, in Spain where the summer months are the hottest of the year, the thermal stratification period occurs during the months of July, August, September and October.

In an embodiment, the rate of carbon incorporation into the phytoplankton in the reservoir is obtained from the bibliography. The ratio can be obtained in aggregated mode, or in an alternative embodiment of the invention, in disaggregated mode according to community composition and dynamics and dominant phytoplankton species.

In an embodiment, the molar ratio oxygen/chlorophyll in the reservoir is obtained from the bibliography.

In an embodiment, the oxygen production per mole of chlorophyll in the reservoir is obtained from the bibliography. In an embodiment of the invention, it is obtained from the bibliography in disaggregated mode according to community composition and dynamics and dominant phytoplankton species.

In an embodiment, the daily oxygen production from macrophytes in the reservoir is obtained from the bibliography. In an embodiment of the invention, it is obtained from the bibliography and broken down by species.

In an embodiment, the phytoplankton to fish transfer efficiency is obtained from the bibliography. In an alternative embodiment, it can be calculated in a disaggregated mode by food web.

In an embodiment, the macrophytes to fish transfer efficiency is obtained from the bibliography. In an alternative embodiment, it can be calculated in a disaggregated mode by food web.

The area of aquatic macrophytes below the mean water level preferably refers to the zone of the reservoir bottom colonized by aquatic macrophytes below the mean water level.

In an embodiment, the chlorophyll-a concentration during a stratification period is measured with high frequency monitoring techniques, such as remotely operated sensors deployed in a long-term basis, taking for example hourly measurements at a fixed depth in the photic zone and at least 4 times a day in a water column profile.

In an embodiment, the fish oxygen consumption is obtained from the bibliography. In an embodiment of the invention the fish oxygen consumption is obtained in a species-disaggregated manner. In an embodiment of the invention, it is obtained as a function of water temperature.

In an embodiment, the oxygen consumption by fine sediments in the epilimnion is obtained from the bibliography. The epilimnion is the top-most layer in a thermally stratified layer.

In an embodiment, the carbon/oxygen stoichiometry in respiration of the fish in the reservoir is taken from the bibliography. In an embodiment of the invention, it is obtained in species-disaggregated form.

In an embodiment, fish biomass per unit area in the reservoir in the moment of calculation of the alert threshold is derived from measurements of the environment.

The biomass confidence interval, as known from the state of the art, is an interval which is expected to typically contain the parameter being estimated, the biomass in this case.

In an embodiment of the invention, the average water clarity is measured as Secchi depth transparency. Secchi depth is a measure of water transparency, where transparency increases with increasing Secchi depth. The Secchi depth is the depth of water beyond which a high-contrast pattern on a submerged disk is no longer visible.

In embodiments of the invention:

calculating a value of a parameter representing the reservoir comprises calculating a volume of the photic zone from the height and the water transparency,
calculating a value of a parameter associated to the primary producers comprises calculating a phytoplankton primary production and a primary production of macrophytes,
calculating a value of a parameter associated to the fish comprises calculating a fish carbon consumption from the fish oxygen consumption and the carbon/oxygen stoichiometry in respiration, and
calculating a photic zone volume associated to a certain state of fish biomass from, at least, the value of a parameter associated to the primary producers and the value of a parameter associated to the fish, comprises:
calculating a photic zone volume that allows the maintenance of a given fish biomass in a healthy condition from the phytoplankton primary production, the macrophytes primary production, the volume of the photic zone, the fish biomass per unit area, the surface area, and the biomass confidence interval.

Fish are considered to be in a healthy condition when the level of environmental stress to which they are subjected does not compromise their biological and physiological compensatory mechanisms. There are health indicators to verify whether these mechanisms are compromised, such as the Blood Performance formula, which contains five common haematological and blood biochemistry parameters.

In an embodiment of the invention, the phytoplankton primary production FCAPpp is calculated with the following formula:

$$FCAPpp = \frac{KCphyto * CHLAavg *  VOLEUavg * 0.00365 *  PFTE}{RO2Cresp * KO2fish  *  0.00876}$$

and the primary production of macrophytes FCAMpp is calculated with the following formula:

$$FCAMpp = \frac{PPO2M * RO2Cresp  * AREAM  *  3.65 *  MFTE}{KCfish  *  0.00876}$$

being PFTE the phytoplankton to fish transfer efficiency, KCphyto the rate of carbon incorporation into the phytoplankton, CHLAavg the chlorophyll content, VOLEUavg the volume of the photic zone, K02fish the fish oxygen consumption, R02Cresp the carbon/oxygen stoichiometry in respiration, MFTE the macrophytes to fish transfer efficiency, PP02M the daily oxygen production from macrophytes and AREAM the area of aquatic macrophytes below the average water level.

In an embodiment of the invention, the fish carbon consumption is calculated with the following formula:

$$KCfish = KO2fish * RO2Cresp$$

being K02fish the fish oxygen consumption and R02Cresp the carbon/oxygen stoichiometry in respiration.

In an embodiment of the invention, the photic zone volume that allows the maintenance of a given fish biomass in a healthy condition VOLEUa is calculated with the following formula:

$$VOLEUa = \frac{VOLEUavg * FBavgUL}{(FCAPpp + FCAMpp) * 1000}$$

being

$$FCAPpp = \frac{KCphyto * CHLAavg *  VOLEUavg * 0.00365 *  PFTE}{RO2Cresp * KO2fish  *  0.00876}$$

$$FCAMpp = \frac{PPO2M * RO2Cresp  * AREAM  *  3.65 *  MFTE}{KO2fish * RO2Cresp  *  0.00876}$$

$$FBavgUL = \frac{FBA * AREAins}{100} + FBavgIC$$

being PFTE the phytoplankton to fish transfer efficiency, KCphyto the rate of carbon incorporation into the phytoplankton, CHLAavg the chlorophyll content, VOLEUavg the volume of the photic zone, K02fish the fish oxygen consumption, R02Cresp the carbon/oxygen stoichiometry in respiration, MFTE the macrophytes to fish transfer efficiency, PP02M the daily oxygen production from macrophytes, AREAM the area of aquatic macrophytes below the average water level, AREAins the surface area, FBA the fish biomass per unit area and FBavgIC the biomass confidence interval.

In an embodiment of the invention, the method additionally comprises:

providing a hypsometric chart of the reservoir which contains, at least, data that relates its volume and the volume of its photic zone, and
looking up in the hypsometric chart a volume threshold that corresponds to the photic zone volume that allows the maintenance of a given fish biomass in a healthy condition.

In an embodiment of the invention, the method additionally comprises:

providing a hypsometric chart of the reservoir which contains, at least, data that relates the heigh of the reservoir and the volume of its photic zone, and

looking up in the hypsometric chart a height threshold that corresponds to the photic zone volume that allows the maintenance of a given fish biomass in a healthy condition.

Hypsometric charts are well-known in the state of the art. They show the relationship between area and elevation for a specified terrain, a reservoir in the present case. They also provide information on the limnological environment of the reservoir. Usually, the reservoir managers have at their disposal the daily hydraulic operation information and hypsometric charts that relate the water level to the volume and surface area of the reservoir. Normally it is the elevation (water level) that is required and with the hypsometric table in each case the volumes are automatically estimated.

In embodiments of the invention:

calculating a value of a parameter representing the reservoir comprises calculating a volume of the photic zone from the water level and transparency,

calculating a value of a parameter associated to the primary producers comprises calculating an oxygen production from chlorophyll during a thermal stratification period from the chlorophyll-a concentration during the stratification period, the molar ratio $O_2$/chlorophyll, the $O_2$ production per mole of chlorophyll-a and the volume of the photic zone,

calculating a value of a parameter associated to the fish in the reservoir comprises calculating an $O_2$ consumption by fish biomass from fish $O_2$ consumption, fish biomass per unit area, surface area and biomass confidence interval,

calculating the photic zone volume associated to a certain state of fish biomass from, at least, the value of a parameter associated to the primary producers and the value of a parameter associated to the fish, comprises:
calculating a photic zone volume for which the risk of mass mortality is high from the volume of the photic zone during a thermal stratification period, the $O_2$ consumption by fish biomass, optionally the oxygen consumption by fine sediments in the epilimnion, and the $O_2$ production from chlorophyll during a thermal stratification period.

The risk of mass mortality is considered high when the level of dissolved oxygen in the water may be insufficient for fish respiration (taking into account other consumptions such as oxygen demand by sediments) or when the health condition of the fish is compromised and in such a situation any sudden change in environmental conditions may lead to direct mortality (e.g. thermal shock due to the action of a pathogen).

In an embodiment of the invention, the oxygen production from chlorophyll during a thermal stratification period PP02 is calculated with the following formula:

$$PPO2 = CHLAest * RO2CHLA * PO2CHLA * VOLEUavg * 0.00365$$

being CHLAest the chlorophyll-a concentration during the stratification period, R02CHLA the molar ratio oxygen/chlorophyll-a, P02CHLA the oxygen production per mole of chlorophyll-a and VOLEUavg the volume of the photic zone.

In an embodiment of the invention, the oxygen consumption by fish biomass 02fish is calculated with the following formula:

$$O2fish = KO2fish * \left(\frac{FBA * AREAins}{100} + FBavgIC\right) * 0.00876$$

being K02fish the fish oxygen consumption, FBA the fish biomass per unit area, AREAins the surface area of the reservoir and FBavgIC the fish biomass confidence interval.

In an embodiment of the invention, the photic zone volume for which the risk of mass mortality is high, VOLEUc, is calculated with the following formula:

$$VOLEUc = \frac{VOLEUest * (O2fish + O2sed)}{PPO2 * 1000}$$

being VOLEUest the volume of the photic zone during a thermal stratification period, 02fish the oxygen consumption by fish biomass, 02sed the oxygen consumption by fine sediments in the epilimnion and PP02 the oxygen production from chlorophyll during a thermal stratification period.

In an embodiment of the invention, the method additionally comprises:

providing a hypsometric chart of the reservoir, which contains data that relates, at least, its volume and the volume of its photic zone, and
looking up in the hypsometric chart a volume threshold that corresponds to the photic zone volume for which the risk of mass mortality is high.

In an embodiment of the invention, the method additionally comprises:

providing a hypsometric chart of the reservoir which contains, at least, data that relates the heigh of the reservoir and the volume of its photic zone, and
looking up in the hypsometric chart a height threshold that corresponds to the photic zone volume for which the risk of mass mortality is high.

In an embodiment of the invention, the value of a parameter representing the reservoir is calculated with the following formula:

$$VOLEUavg \; = \; COTAavg - 2.5 * SDTavg$$

being COTAavg the height and SDTavg the water transparency.

In embodiments of the invention, the method further includes emitting an alert when the reservoir level reaches an alert threshold.

In embodiments of the invention, the method further includes emitting an alert when the reservoir level reaches a critical threshold.

In embodiments of the invention, when the reservoir level reaches a certain threshold, such as an alert threshold or a critical threshold, the method further comprises acting on the reservoir. Acting on the reservoir may imply acting on the fish biomass, for example removing fish from the reservoir.

A second aspect of the invention relates to a computer program which, when executed by a computer, causes the computer to perform the computer-implemented method of the first aspect.

A third aspect of the invention relates to a non-transitory computer-readable storage medium storing the computer program of the second aspect.

Additional advantages and features of the invention will become apparent from the detail description that follows and will be particularly pointed out in the appended claims.

## BRIEF DESCRIPTION OF THE DRAWINGS

In order to complete the description and to provide a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a flow diagram of a method for evaluating a reservoir according to embodiments of the invention.

Figure 2 shows a flow diagram of the steps of a method for calculating a photic zone volume that allows, at least, the maintenance of a given fish biomass in a healthy condition in the reservoir (alert threshold), according to embodiments of the invention.

Figure 3 shows a flow diagram of the steps of a method for calculating a photic zone volume for which the risk of mass mortality is high (critical threshold), according to embodiments of the invention.

Figure 4 shows an exemplary chart with alert thresholds for several reservoirs in Spain.

Figure 5 shows a graph of the volume of a reservoir over a period of time, on which alert and critical thresholds obtained are plotted.

Figure 6 shows a chart with the variation of the alert volume threshold in the Aracena reservoir as a function of the biomass of fish removed.

## DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

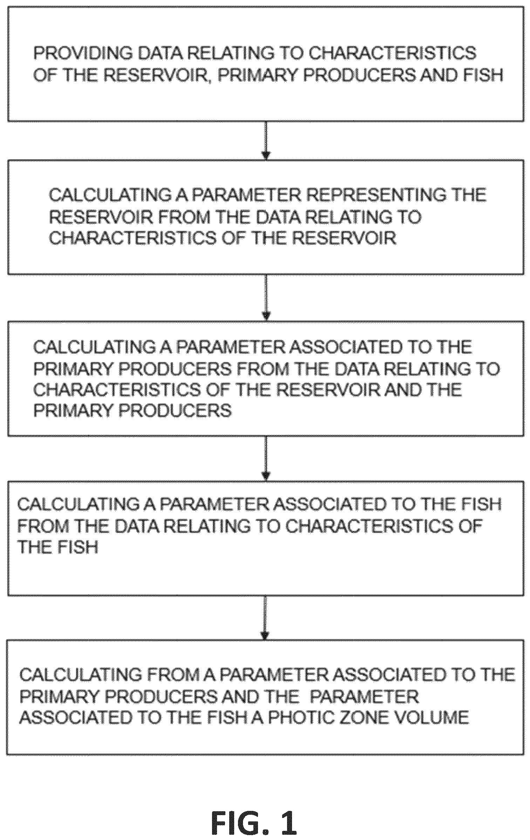

Figure 1 represents a flow diagram of the steps of a method for evaluating a reservoir. The evaluation is based on the determination of a photic volume associated to a certain state of fish biomass.

As shown in figure 1, the method comprises a first step of providing, at a computing system, data relating to characteristics of the reservoir, data relating to characteristics of primary producers in the reservoir and data relating to characteristics of fish in the reservoir.

Next, the following is performed, not necessarily in this order of execution: calculating a value of a parameter representing the reservoir from the data relating to characteristics of the reservoir; calculating a value of a parameter associated to the primary producers in the reservoir from the data relating to characteristics of the reservoir and the data relating to characteristics of the primary producer; and calculating a value of a parameter associated to the fish in the reservoir from, at least, the data relating to characteristics of the fish in the reservoir.

Finally, the method performs calculating from, at least, the value of a parameter associated to the primary producers and the value of a parameter associated to the fish, a photic zone volume associated to a certain state of fish biomass.

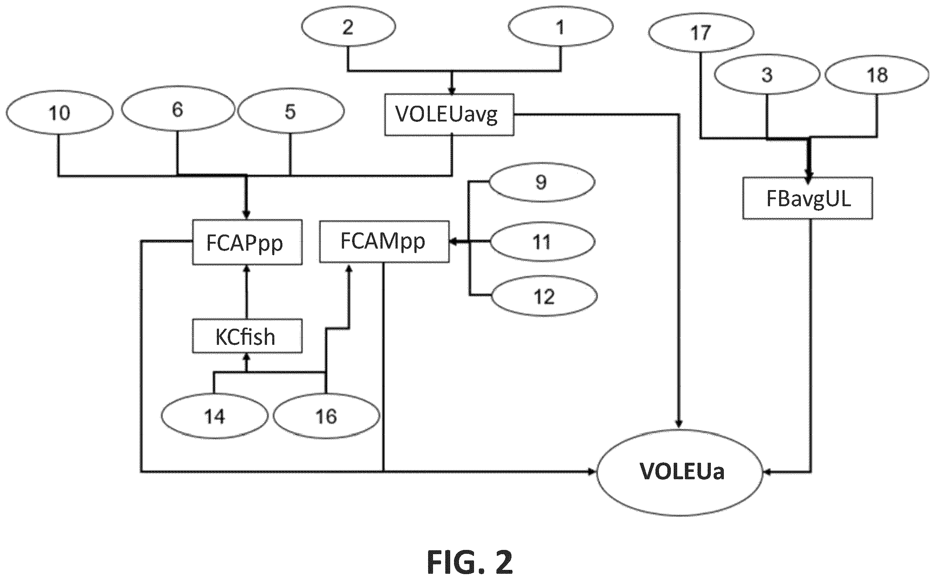

In a possible embodiment of the invention, illustrated in figure 2, the photic zone volume associated with a given state of fish biomass present in the reservoir is a photic zone volume that allows the maintenance of a given fish biomass in a healthy condition. This photic zone volume corresponds to an alert volume threshold. In this case, the evaluation of the reservoir is based on the estimation of a degree of saturation of the carrying capacity, beyond which, as the water level falls, the health of the fish in the reservoir will deteriorate under sustained and increasing environmental stress due to a variety of factors including both competition for trophic and habitat resources in general, and water quality.

This photic volume, understood as a threshold, is based on the capacity of the ecosystem to maintain a given fish biomass under healthy conditions in terms of production and resources. This threshold is reached when the fish demand equals the fraction available to consumers of the endogenous primary production (generated in the reservoir itself, without considering external inputs of organic matter), calculated from a general productivity index based on the average chlorophyll-a concentration.

As the water volume reduces, the fish biomass compatible decreases, while the threshold lowers at the same time. If the current fish biomass exceeds the target biomass, a zone is entered where the environmental risk increases as the water level falls.

This threshold, which is considered an alert threshold, establishes the transition to a below good status in relation to the health of the fish and thus of the reservoir ecosystem. Below this threshold, the risk of collapse increases progressively and, once the low water level situation has been reached and the summer period is reached, the triggers for mortality are usually uncontrollable external factors.

Following the above-mentioned approach to estimating carrying capacity, it is assumed that the primary production of phytoplankton governs the trophic dynamics of the ecosystem, i.e. that the biomass produced from phytoplankton imposes a limit on the production of other trophic levels and ultimately fish.

In this first embodiment of the method, illustrated in figure 2, the step of providing data relating to characteristics of the reservoir, data relating to characteristics of primary producers in the reservoir and data relating to characteristics of fish in the reservoir comprises providing a hypsometric chart of the reservoir, height 1 (water level), water transparency 2, volume of the photic zone, surface area 3, phytoplankton to fish transfer efficiency 10, rate of carbon incorporation into the phytoplankton 5, chlorophyll content 6, macrophytes to fish transfer efficiency 11, daily oxygen production from macrophytes 9, area of aquatic macrophytes below the average water level 12, fish oxygen consumption 14, carbon/oxygen stoichiometry in respiration 16, fish biomass per unit area 17 and biomass confidence interval 18.

In the present embodiment of the invention, the height 1 (water level) is the daily average over a period considered and it is measured in heigh above mean sea level. In the present embodiment, the water transparency 2 is the year-on-year average Secchi transparency, and it is also measured in heigh above mean sea level. Both 1, 2 can be measured using high frequency monitoring. The volume of the photic zone is the daily average over a period of interest. The surface area 3 is the surface area of the reservoir at the time of the fish evaluation. The chlorophyll content 6 is the year-on-year average and is measured in $g/m^3$. The daily oxygen production from macrophytes 9 is the estimated annual production.

The fish oxygen consumption 14 can be obtained from values of the dominant species from the literature. In addition, it can be estimated using bioenergetic models that relate oxygen consumption to fish size and water temperature. The influence of water temperature allows the value to vary depending on the time of year.

A theoretical value of carbon assimilation per unit of phytoplankton biomass, expressed in terms of chlorophyll, is used, and from this, the annual primary production in terms of carbon (t C/year) in the reservoir is calculated. For this, the average chlorophyll concentration and the thickness and volume of the photic zone are taken into account. The thickness of the photic zone is calculated from the water transparency records by Secchi disc, whose average value has been multiplied by a factor of 2.5, to estimate the average depth that light reaches in the water column. Where submerged aquatic macrophyte formations are present, their production is added to the above, and calculated in a similar way, but based on area of occupancy and areal biomass and production rate.

Then, as represented in figure 2, after providing the mentioned parameters, the next step is calculating a parameter representing the reservoir from the data relating to characteristics of the reservoir. More particularly, as illustrated in more detail in figure 2, the next step is obtaining a volume of the photic area VOLEUavg of the reservoir, by applying the following formula:

$$VOLEUavg = COTAavg - 2,5 * SDTavg$$

Being COTAavg the height 1 and SDTavg the water transparency 2. In this example, the volume of the photic area VOLEUavg is obtained in cubic decameters ($dam^3$).

Following the flow diagram of figure 2, the next step of calculating a parameter associated to the primary producers from the data relating to characteristics of the reservoir and the primary producers comprises calculating an annual primary production FPy, which is the sum of a phytoplankton primary production FCAPpp and a primary production of macrophytes FCAMpp, when present.

In reservoirs and lakes with sufficient temporary stability of the water level, submerged aquatic vegetation (SAV) can develop, composed of different taxa of aquatic macrophytes, which in this case must be taken into account in the calculation of the endogenous production of the water body. In these cases, the biogenic capacity of the ecosystem under normal conditions (not in a drawdown situation) is not only due to phytoplankton but also to aquatic macrophytes. For that reason, the method also estimates the contribution of this biological element, adding its production to that of phytoplankton to infer the volume threshold, since it is based on the biogenic capacity of the ecosystem.

The phytoplankton primary production FCAPpp is calculated from a rate of carbon incorporation into the fish KCfish and from phytoplankton primary production FPPy:

$$FCAPpp = \frac{FPPy}{KCfish * 0.00876}$$

KCfish is the rate of carbon incorporation into the fish and is estimated by converting oxygen consumed in respiration to carbon, and then from carbon to dry weight and to wet weight of fish. In this way, the carbon consumption per unit weight in fish respiration over the year is obtained, as shown in figure 2, like:

$$KCfish = RO2Cresp * KO2fish$$

being R02Cresp fish oxygen consumption 14, and K02fish carbon/oxygen stoichiometry in respiration 16.

Also, being the annual production of fish from phytoplankton primary production FPPy calculated like:

$$FPPy = PPy * PFTE$$

Where PFTE is the phytoplankton to fish transfer efficiency 10 and PPy is the primary production from phytoplankton, which is obtained like:

$$PPy = KCphyto * CHLAavg * VOLEUavg * 0.00365$$

being KCphyto the rate of carbon incorporation into the phytoplankton 5, CHLAavg the chlorophyll content 6 and VOLEUavg the volume of the photic zone.

On the other hand, the primary production of macrophytes FCAMpp is calculated like:

$$CAMpp = \frac{FPMy}{KCfish * 0.00876}$$

being KCfish the rate of carbon incorporation into the fish, as previously calculated, and FPMy the annual fish production from primary production of macrophytes, which is calculated like:

$$FPMy = MPy * MFTE$$

Wherein MFTE is the macrophytes to fish transfer efficiency 11 and MPy represents the primary production from macrophytes, which is calculated like:

$$MPy = PPO2M * RO2Cresp * AREAM * 3.65$$

being PP02M the daily oxygen production from macrophytes 9, R02Cresp the C/O$_2$ stoichiometry in respiration 16 and AREAM the area of aquatic macrophytes below the average water level 12.

The annual primary FPy production is therefore:

$$FPy = FCAPpp + FCAMpp$$

This value represents the transfer efficiency from primary producers to fish and can be adjusted to the embodiment of the food web in each case from actual data on food webs in reservoirs, which are currently scarce.

Following the flow diagram in figure 2, in this first embodiment of the invention, the next step is calculating, from a parameter associated to the primary producers and the parameter associated to the fish, a photic zone volume associated with a given state of fish biomass which, in this embodiment, is a photic zone volume that allows the maintenance of a given fish biomass in a healthy condition. For that, as detailed in figure 2, firstly an actual fish biomass FBavgIL must be obtained, applying the following formula:

$$FBavgIL = \frac{FBA * AREAins}{100} + FBavgIC$$

In this formula, FBA represents a fish biomass per unit area 17 in the reservoir in the moment of calculation of the alert threshold, AREAins represents a surface area of the reservoir 3 when the fish biomass per unit area 17 is measured, and FBavgIC is a biomass confidence interval 18.

Then, the photic zone volume VOLEUa can be obtained like:

$$VOLEUa = \frac{VOLEUavg * FBavgUL}{FPy * 1000}$$

An additional step of the method, not illustrated in the figures, is looking up in the hypsometric chart a volume threshold that corresponds to the photic zone volume that allows the maintenance of a given fish biomass in a healthy condition and/or looking up in the hypsometric chart a height threshold that corresponds to the photic zone volume that allows the maintenance of a given fish biomass in a healthy condition.

When the carbon available for secondary production (10% of that fixed in the primary production of phytoplankton and macrophytes) is close to or lower than that consumed in fish respiration, it could be argued that the system is close to the theoretical limit of fish biomass loading in the reservoir. However, it should be taken into consideration that the consumption of the organic carbon produced is not exclusive to fish, as there are other biological components involved that constitute intermediate trophic levels and that in some cases do not pass through them, or only partially.

There is an unconsidered contribution of exogenous organic matter (not produced in the reservoir), although in lakes and reservoirs it usually has a much lower weight than endogenous organic matter (phytoplankton and in some cases also aquatic macrophytes).

In short, the criterion applied represents a threshold estimated from real data and parameters taken from the scientific literature and it can be expected that when the ratio between the carbon used by fish (which is still an indicator of fish biomass) and that fixed by phytoplankton is close to or above unity, the system could be in an alert zone for an eventual drop in water level and/or primary production (oligotrophication).

In other words, when the fish biomass in the reservoir is large enough to consume all the carbon converted into organic matter by phytoplankton, this ratio will be close to unity and in this situation the ecosystem food web is functioning at high utilization, so that the extent of the non-collapse response margins is smaller.

These calculations do not allow the prediction of a mortality event from a certain threshold of hydraulic exploitation, because it depends on multiple dynamic factors that have not been considered, both from the point of view of trophic resources and water quality. On the other hand, and this is the purpose of this method, it does make it possible to qualitatively grade the risks according to the trophic potential of the reservoir and the fish biomass and could therefore be considered as a first warning of entry into the alert zone of mortality or collapse of fish populations.

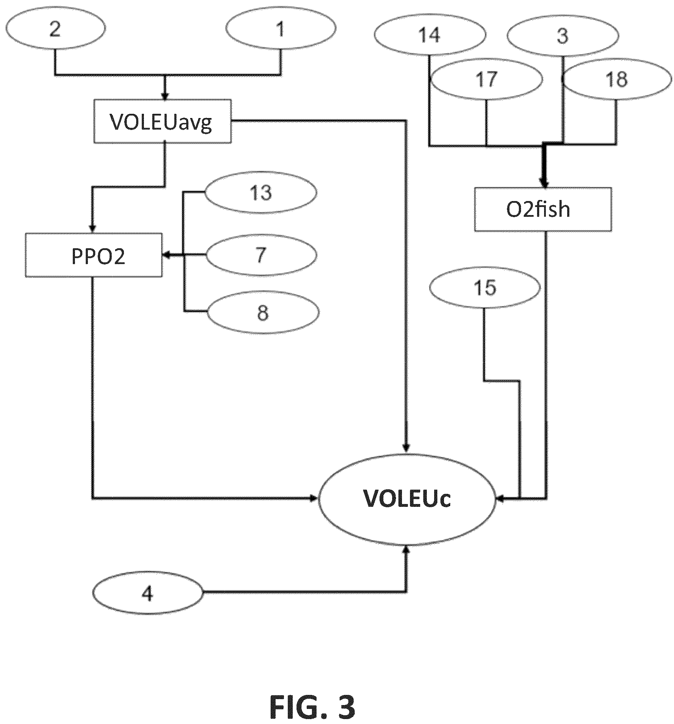

Figure 3 represents another embodiment of the method, for calculating a photic zone volume associated with a certain state of fish biomass present in the reservoir, which in this case is a photic zone volume for which the risk of mass mortality is high. In this case, this photic zone volume corresponds to an environmental critical volume in reservoirs. This calculation of photic zone volume can be made in addition to the calculation of the embodiment of figure 2, or as an alternative thereto. For example, there may be reservoirs in which only the photic zone volume that allows the maintenance of a given fish biomass in a healthy condition is required (embodiment of figure 2), or there may be reservoirs in which only the photic zone volume for which the risk of mass mortality is high is required (embodiment of figure 3), or there may be reservoirs in which there is an interest in calculating both photic zone volumes.

This environmental critical volume (photic zone volume) represents the availability of oxygen for respiration. Once the alert threshold has been exceeded and the volume of the reservoir is lower, if the water reserve continues to decrease and, despite the risk, the circumstances triggering a mortality have not occurred, there will come a time when the oxygen reserve in the water will be insufficient to sustain the demand of the ecosystem, including the respiration of the fish. In such a situation, the risk of mortality is triggered, and this is when the critical threshold is reached. In addition, during the period of thermal stratification, a hypolimnetic zone is generated in which dissolved oxygen becomes scarce (hypoxia) or virtually non-existent (anoxia). This reduces the useful habitat for fish and exposes them to stressful situations.

Oxygen deficiency has adverse effects on the metabolic and behavioral processes of aquatic organisms. For example, moderate hypoxia (2 to 5 mg $O_2$/L) can cause physiological or biochemical stress (hormonal responses, oxidative stress) in fish and invertebrates, and severe hypoxia compromises survival, growth, reproduction, and population development. Such problems are particularly evident in situations of drought and low water reserves in reservoirs.

Below this critical threshold, therefore, there is a high risk of mass mortality, and this risk is no longer solely dependent on random external factors and the time of year, because widespread dissolved oxygen depletion imposes acute stress and survival is compromised in the short term. Mortality will be more rapid and will affect a significant proportion of fish stocks, with some degree of species and size selectivity.

In this case, the first step requires providing data relating to characteristics of the reservoir, primary producers and fish having the data previously provided for the first embodiment of the method, further data is needed. So, a first step of this second embodiment is providing the following data: chlorophyll-a concentration during the stratification period 13, molar ratio oxygen/chlorophyll 7, oxygen production per mole of chlorophyll 8 and volume of the photic zone during a thermal stratification period 4.

Then, the step of calculating a parameter representing the reservoir from the data relating to characteristics of the reservoir comprises, in this second embodiment, calculating the volume of the photic zone VOLEUavg of the reservoir:

$$VOLEUavg = COTAavg - 2.5 * SDTavg$$

The next step of calculating a parameter associated to the primary producers from the data relating to characteristics of the reservoir and the primary producers comprises, in this second embodiment, calculating oxygen production from chlorophyll during a thermal stratification period PP02. For that, the parameters of chlorophyll-a concentration during the stratification period 13, molar ratio oxygen/chlorophyll 7 in the reservoir and oxygen production per mole of chlorophyll 8 in the reservoir are used. Then, the oxygen production from chlorophyll during a thermal stratification period PP02 is obtained like:

$$PP02 = CHLAest * RO2CHLA * PO2CHLA * VOLEUavg * 0.00365$$

When this amount of oxygen, expressed in tones/year, equals the amount of oxygen demanded by the fish biomass currently in the reservoir for respiration, the volume and level of the reservoir corresponding to the volume of the photic zone capable of generating the required amount of oxygen through primary production is established.

Following the flow diagram of figure 3, the next step is calculating a parameter associated to the fish from the data relating to characteristics of the fish, which in this second embodiment comprises calculating an oxygen consumption by fish 02fish. For that, data for fish oxygen consumption 14, biomass per unit area 17 in the reservoir in the moment of calculation of the alert threshold, surface area of the reservoir 3 when the fish biomass per unit area 17 is measured and biomass confidence interval 18 are used.

Then, the oxygen consumption by fish 02fish is calculated by applying the following formula:

$$O2fish = KO2fish * \left(\frac{FBA * AREAins}{100} + FBavgIC\right) * 0.00876$$

As shown in figure 3, the next step is calculating a photic zone volume associated with a given state of fish biomass present in the reservoir, which in this embodiment represent the critic threshold, which is the photic zone volume for which the risk of mass mortality is high. For that the parameter of volume of the photic zone during the thermal stratification period of the reservoir 4 VOLEUest is provided. Then, the photic zone volume VOLEUc is obtained like:

$$VOLEUc = \frac{VOLEUest * O2fish}{PPO2 * 1000}$$

A first critical threshold of the photic zone volume is thus obtained, which is subsequently adjusted to incorporate the oxygen demand of the sediments. This demand is only taken into account when, as the water level in the reservoir drops, the fine sediments come into contact with the epilimnetic zone, which in reservoirs with advanced eutrophication is the only one that contains sufficient dissolved oxygen for fish respiration during the culmination of the thermal stratification period. This zone has a thickness at latitudes in Spain, as an example, typically between 5 and 10 m at the most critical time of the summer and can be determined from the vertical profile of the temperature in the water column and more directly by observing the depth of the oxycline.

To estimate the oxygen demand by sediments in the epilimnion during a drawdown situation, the average fine sediment surface between the alert threshold and the critical threshold is calculated, as represented in figure 3. The resulting demand is added to that of the fish to recalculate the critical threshold using the following formula:

$$VOLEUc = \frac{VOLEUest * (O2fish + O2sed)}{PPO2 * 1000}$$

being 02sed the oxygen consumption by fine sediments in the epilimnion 15.

The final step is looking up in the hypsometric chart a volume threshold that corresponds to the photic zone volume for which the risk of mass mortality is high and looking up in the hypsometric chart a height threshold that corresponds to the photic zone volume for which the risk of mass mortality is high.

In an embodiment of the invention, the two previously detailed embodiments of the method, for calculating the alert volume and for calculating the critical volume are executed separately. Alternatively, in an embodiment of the invention, the two previously explained embodiments of the method are executed simultaneously, so that some of the common parameters are shared and used in both cases.

When the reservoir level reaches the alert threshold, continuous monitoring of the reservoir conditions is recommended. In turn, the critical threshold can be lowered in the short term through fish biomass removal, which will normally focus on alien and invasive species and adult sizes. The pattern of these actions will need to be adapted to the productivity of the system, so that in more eutrophic reservoirs these actions will be more intensive and frequent.

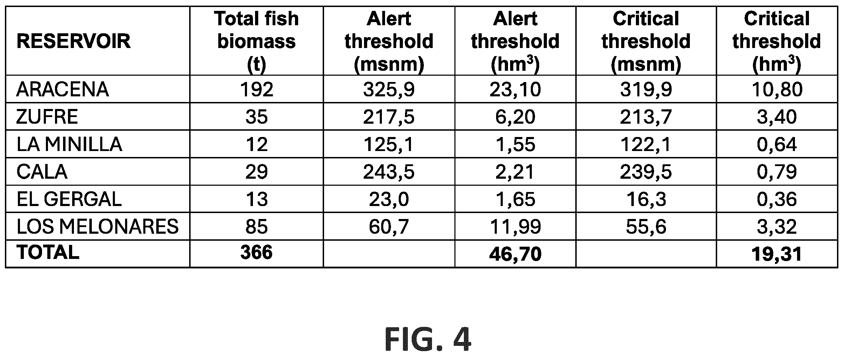

The method of the invention has been applied to six reservoirs supplying the city of Seville, in Spain, with the result shown in the table in Figure 4, both in terms of level and volume of water in the reservoir. The table indicates that there are two reservoirs in which the water level is approaching these risk thresholds, and specifically the Aracena reservoir is already at the first alert threshold.

The table in Figure 4 shows that in the present study, in most cases the two thresholds are very close to each other, indicating that the current fish biomass is still far from the reservoir's carrying capacity limit, which is what determines the alert level. The exception is the Aracena reservoir, which supports a very high biomass of fish, close to 700 kg/ha, and which is at the limit of the carrying capacity in the current water reserve situation.

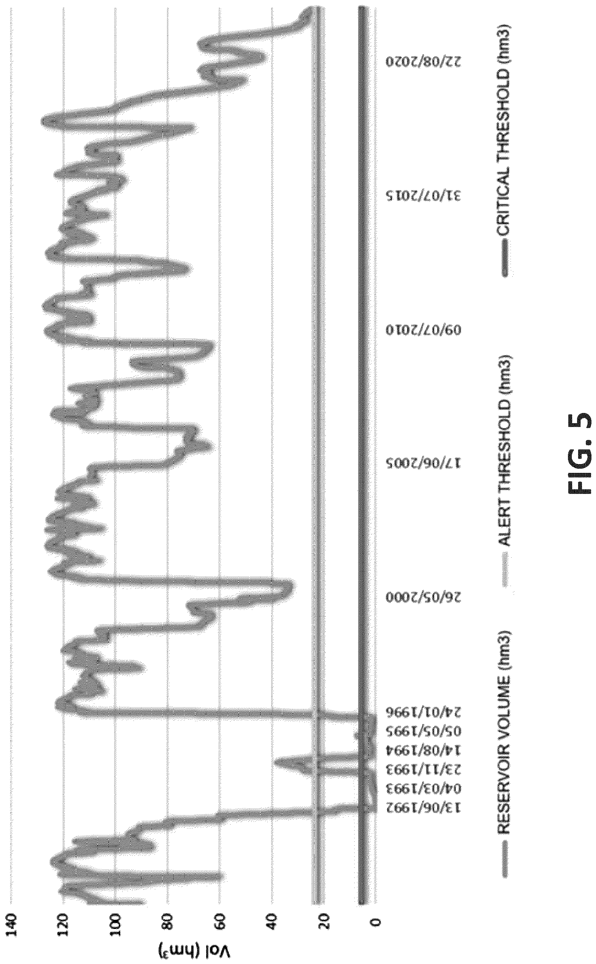

Figure 5 shows a chart where the volume of a reservoir (hm³) through thirty years has been represented. Additionally, the light grey line represents the alert threshold, and the darker grey line represents the critical threshold. As it can be seen the volume of the reservoir has been lower that the alert threshold from 1991 to 1993 and from 1994 until 1996. The volume of the reservoir has been lower than the critical threshold twice, between 1992 and 1993 and between 1993 and 1994, with a recovery period between.

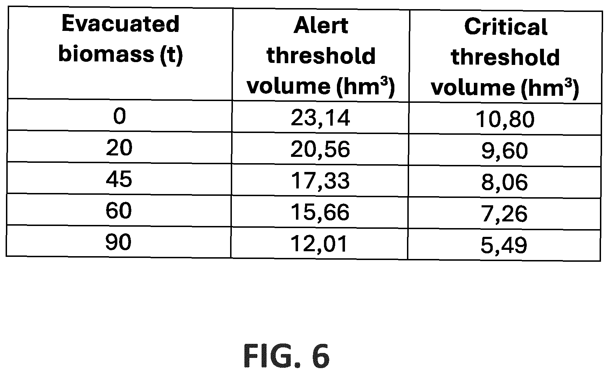

The table of figure 6 shows how the two thresholds decrease as biomass is extracted.

The numerical signs and corresponding components indicated in Fig. 1 to 6 are further listed below:

height 1

water transparency 2

surface area 3

volume of the photic zone during a period when the reservoir is in a thermal stratification period 4

rate of carbon incorporation into the phytoplankton 5

chlorophyll content 6

molar ratio oxygen/chlorophyll 7

oxygen production per mole of chlorophyll 8

daily oxygen production from macrophytes 9

phytoplankton to fish transfer efficiency 10

macrophytes to fish transfer efficiency 11

area of aquatic macrophytes below the average water level 12

chlorophyll-a concentration during a stratification period 13

fish oxygen consumption 14

oxygen consumption by fine sediments in the epilimnion 15

carbon/oxygen stoichiometry in respiration 16

fish biomass per unit area 17

biomass confidence interval 18

**Claims**

1. A computer implemented method for evaluating a reservoir, comprising:

   providing, at a computing system, data relating to characteristics of the reservoir, data relating to characteristics of primary producers in the reservoir and data relating to characteristics of fish in the reservoir,
   calculating a value of a parameter representing the reservoir from the data relating to characteristics of the reservoir,
   calculating a value of a parameter associated to the primary producers in the reservoir from the data relating to characteristics of the reservoir and the data relating to characteristics of the primary producers,
   calculating a value of a parameter associated to the fish in the reservoir from, at least, the data relating to characteristics of the fish in the reservoir, and
   calculating from, at least, the value of a parameter associated to the primary producers and the value of a parameter associated to the fish, a photic zone volume associated with a given state of fish biomass present in the reservoir.

2. The method of claim 1, wherein:

   the characteristics of the reservoir comprise one or more of: height (1), water transparency (2), surface area (3), and volume of the photic zone during a period when the reservoir is in a thermal stratification period (4),
   the characteristics of the primary producers in the reservoir comprise one or more of: rate of carbon incorporation into the phytoplankton (5), chlorophyll content (6), molar ratio oxygen/chlorophyll (7), oxygen production per mole of chlorophyll (8), daily oxygen production from macrophytes (9), phytoplankton to fish transfer efficiency (10), macrophytes to fish transfer efficiency (11), area of aquatic macrophytes below the average water level (12), and chlorophyll-a concentration during a stratification period (13), and
   the characteristics of the fish in the reservoir comprise one or more of: fish oxygen consumption (14), oxygen consumption by fine sediments in the epilimnion (15), carbon/oxygen stoichiometry in respiration (16), fish biomass per unit area (17), and biomass confidence interval (18).

**3.** The method of claim 2, wherein:

calculating a value of a parameter representing the reservoir comprises calculating a volume of the photic zone from the height (1) and the water transparency (2),

calculating a value of a parameter associated to the primary producers comprises calculating a phytoplankton primary production and a primary production of macrophytes,

calculating a value of a parameter associated to the fish comprises calculating a fish carbon consumption from the fish oxygen consumption (14) and the carbon/oxygen stoichiometry in respiration (16), and

calculating a photic zone volume associated with a given state of fish biomass from, at least, the value of a parameter associated to the primary producers and the value of a parameter associated to the fish, comprises: calculating a photic zone volume that allows the maintenance of a given fish biomass in a healthy condition from the phytoplankton primary production, the macrophytes primary production, the volume of the photic zone, the fish biomass per unit area (17), the surface area (3), and the biomass confidence interval (18).

**4.** The method of claim 3, wherein the phytoplankton primary production FCAPpp is calculated with the following formula:

$$\text{FCAPpp} = \frac{\text{KCphyto} * \text{CHLAavg} * \text{VOLEUavg} * 0.00365 * \text{PFTE}}{\text{RO2Cresp} * \text{KO2fish} * 0.00876}$$

and wherein the primary production of macrophytes FCAMpp is calculated with the following formula:

$$\text{FCAMpp} = \frac{\text{PPO2M} * \text{RO2Cresp} * \text{AREAM} * 3.65 * \text{MFTE}}{\text{KO2fish} * \text{RO2Cresp} * 0.00876}$$

being PFTE the phytoplankton to fish transfer efficiency (10), KCphyto the rate of carbon incorporation into the phytoplankton (5), CHLAavg the chlorophyll content (6), VOLEUavg the volume of the photic zone, K02fish the fish oxygen consumption (14), R02Cresp the carbon/oxygen stoichiometry in respiration (16), MFTE the macrophytes to fish transfer efficiency (11), PP02M the daily oxygen production from macrophytes (9) and AREAM the area of aquatic macrophytes below the average water level (12).

**5.** The method of any of claims 3 or 4, wherein the fish carbon consumption KCfish is calculated with the following formula:

$$\text{KCfish} = \text{KO2fish} * \text{RO2Cresp}$$

being K02fish the fish $O_2$ consumption (14) and R02Cresp the carbon/oxygen stoichiometry in respiration (16).

**6.** The method of any of any of claims 3-5, wherein the photic zone volume that allows the maintenance of a given fish biomass in a healthy condition VOLEUa is calculated with the following formula:

$$\text{VOLEUa} = \frac{\text{VOLEUavg} * \text{FBavgUL}}{(\text{FCAPpp} + \text{FCAMpp}) * 1000}$$

being

$$\text{FCAPpp} = \frac{\text{KCphyto} * \text{CHLAavg} * \text{VOLEUavg} * 0.00365 * \text{PFTE}}{\text{RO2Cresp} * \text{KO2fish} * 0.00876}$$

$$\text{FCAMpp} = \frac{\text{PPO2M} * \text{RO2Cresp} * \text{AREAM} * 3.65 * \text{MFTE}}{\text{KO2fish} * \text{RO2Cresp} * 0.00876}$$

$$FBavgUL = \frac{FBA * AREAins}{100} + FBavgIC$$

being PFTE the phytoplankton to fish transfer efficiency (10), KCphyto the rate of carbon incorporation into the phytoplankton (5), CHLAavg the chlorophyll content (6), VOLEUavg the volume of the photic zone, K02fish the fish oxygen consumption (14), RO2Cresp the carbon/oxygen stoichiometry in respiration (16), MFTE the macrophytes to fish transfer efficiency (11), PP02M the daily oxygen production from macrophytes (9), AREAM the area of aquatic macrophytes below the average water level (12), FBA the fish biomass per unit area (17), AREAins the surface area (3) and FBavgIC the biomass confidence interval (18).

7. The method of any of claims 3-6, additionally comprising:

   providing a hypsometric chart of the reservoir which contains, at least, data that relates its volume and the volume of its photic zone, and
   looking up in the hypsometric chart a volume threshold that corresponds to the photic zone volume that allows the maintenance of a given fish biomass in a healthy condition.

8. The method of any of claims 3-7, additionally comprising:

   providing a hypsometric chart of the reservoir which contains, at least, data that relates the heigh of the reservoir and the volume of its photic zone, and
   looking up in the hypsometric chart a height threshold that corresponds to the photic zone volume that allows the maintenance of a given fish biomass in a healthy condition.

9. The method of claim 2, wherein:

   calculating a value of a parameter representing the reservoir comprises calculating a volume of the photic zone from the height (1) and the water transparency (2),
   calculating a value of a parameter associated to the primary producers comprises calculating an oxygen production from chlorophyll during a thermal stratification period from the chlorophyll-a concentration during the stratification period (13), the molar ratio oxygen/chlorophyll (7), the oxygen production per mole of chlorophyll (8) and the volume of the photic zone,
   calculating a value of a parameter associated to the fish in the reservoir comprises calculating an oxygen consumption by fish biomass from fish oxygen consumption (14), fish biomass per unit area (17), surface area (3) and biomass confidence interval (18),
   calculating the photic zone volume associated with a given state of fish biomass from, at least, the value of a parameter associated to the primary producers and the value of a parameter associated to the fish, comprises: calculating a photic zone volume for which the risk of mass mortality is high from the volume of the photic zone during a thermal stratification period (4), the oxygen consumption by fish biomass, optionally the oxygen consumption by fine sediments in the epilimnion (15), and the oxygen production from chlorophyll during a thermal stratification period.

10. The method of claim 9, wherein the oxygen production from chlorophyll during a thermal stratification period PP02 is calculated with the following formula:

$$PP02 = CHLAest * RO2CHLA * PO2CHLA * VOLEUavg * 0.00365$$

being CHLAest the chlorophyll-a concentration during the stratification period (13), R02CHLA the molar ratio oxygen/chlorophyll-a (7), P02CHLA the oxygen production per mole of chlorophyll-a (8) and VOLEUavg the volume of the photic zone.

11. The method of any of claims 9 or 10, wherein the oxygen consumption by fish biomass 02fish is calculated with the following formula:

$$O2fish = KO2fish * \left( \frac{FBA * AREAins}{100} + FBavgIC \right) * 0.00876$$

being K02fish the fish oxygen consumption (14), FBA the fish biomass per unit area (17), *AREAins* the surface area (3) and FBavgIC the fish biomass confidence interval (18).

12. The method of claims 10 and 11, wherein the photic zone volume for which the risk of mass mortality is high is calculated with the following formula:

$$VOLEUc = \frac{VOLEUest * (O2fish + O2sed)}{PPO2 * 1000}$$

being VOLEUest the volume of the photic zone during a thermal stratification period (4), 02fish the oxygen consumption by fish biomass, 02sed the oxygen consumption by fine sediments in the epilimnion (15) and PP02 the oxygen production from chlorophyll during a thermal stratification period.

13. The method of any of claims 9-12, additionally comprising:

    providing a hypsometric chart of the reservoir, which contains data that relates, at least, its volume and the volume of its photic zone, and
    looking up in the hypsometric chart a volume threshold that corresponds to the photic zone volume for which the risk of mass mortality is high.

14. The method of any of claims 9-13, additionally comprising:

    providing a hypsometric chart of the reservoir which contains, at least, data that relates the heigh of the reservoir and the volume of its photic zone, and
    looking up in the hypsometric chart a height threshold that corresponds to the photic zone volume for which the risk of mass mortality is high.

15. The method of any of claims 2-14, wherein the value of a parameter representing the reservoir is calculated with the following formula:

$$VOLEUavg = COTAavg - 2.5 * SDTavg$$

being COTAavg the height (1) and SDTavg the water transparency (2).

PROVIDING DATA RELATING TO CHARACTERISTICS OF THE RESERVOIR, PRIMARY PRODUCERS AND FISH

↓

CALCULATING A PARAMETER REPRESENTING THE RESERVOIR FROM THE DATA RELATING TO CHARACTERISTICS OF THE RESERVOIR

↓

CALCULATING A PARAMETER ASSOCIATED TO THE PRIMARY PRODUCERS FROM THE DATA RELATING TO CHARACTERISTICS OF THE RESERVOIR AND THE PRIMARY PRODUCERS

↓

CALCULATING A PARAMETER ASSOCIATED TO THE FISH FROM THE DATA RELATING TO CHARACTERISTICS OF THE FISH

↓

CALCULATING FROM A PARAMETER ASSOCIATED TO THE PRIMARY PRODUCERS AND THE PARAMETER ASSOCIATED TO THE FISH A PHOTIC ZONE VOLUME

# FIG. 1

FIG. 2

FIG. 3

| RESERVOIR | Total fish biomass (t) | Alert threshold (msnm) | Alert threshold (hm$^3$) | Critical threshold (msnm) | Critical threshold (hm$^3$) |
|---|---|---|---|---|---|
| ARACENA | 192 | 325,9 | 23,10 | 319,9 | 10,80 |
| ZUFRE | 35 | 217,5 | 6,20 | 213,7 | 3,40 |
| LA MINILLA | 12 | 125,1 | 1,55 | 122,1 | 0,64 |
| CALA | 29 | 243,5 | 2,21 | 239,5 | 0,79 |
| EL GERGAL | 13 | 23,0 | 1,65 | 16,3 | 0,36 |
| LOS MELONARES | 85 | 60,7 | 11,99 | 55,6 | 3,32 |
| TOTAL | 366 | | 46,70 | | 19,31 |

## FIG. 4

EP 4 660 907 A1

**FIG. 5**

| Evacuated biomass (t) | Alert threshold volume (hm³) | Critical threshold volume (hm³) |
|---|---|---|
| 0 | 23,14 | 10,80 |
| 20 | 20,56 | 9,60 |
| 45 | 17,33 | 8,06 |
| 60 | 15,66 | 7,26 |
| 90 | 12,01 | 5,49 |

## FIG. 6

<table>
<tr><td>

Europäisches<br>Patentamt<br>European<br>Patent Office<br>Office européen<br>des brevets

</td><td align="center">

**EUROPEAN SEARCH REPORT**

</td><td>

**Application Number**

**EP 24 38 2603**

</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/048966 A1 (BENCHMARK HOLDINGS PLC [GB]; FVG INC [US]) 31 March 2016 (2016-03-31) * abstract * * page 2, line 18 - line 28 * * page 5, lines 15-32 - page page * * page 6, line 16 - page 7, line 7 * * page 11, line 22 - line 27 * * page 14, line 4 - line 16 * ----- | 1-15 | INV. G06Q10/04 A01K61/00 G06Q50/02 |
| A | US 2006/122794 A1 (SPRAGUE MICHAEL C [US] ET AL) 8 June 2006 (2006-06-08) * abstract * * paragraphs [0013] - [0021], [0163] - [0180], [0184] - [0185], [0196], [0206], [0223] * ----- | 1-15 | |
| | | | **TECHNICAL FIELDS SEARCHED (IPC)** G06Q A01K |

The present search report has been drawn up for all claims

| Place of search | Date of completion of the search | Examiner |
|---|---|---|
| Munich | 30 October 2024 | Moltenbrey, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 38 2603

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | Publication date |
|---|---|---|---|
| WO 2016048966 A1 | 31-03-2016 | NONE | |
| US 2006122794 A1 | 08-06-2006 | NONE | |

EPO FORM P0459

For more details about this annex : see Official Journal of the European Patent Office, No. 12/82